# EUROPEAN PATENT APPLICATION

(11) **EP 2 143 690 A1**
(43) Date of publication of application: **13.01.2010**
(21) Application number: 07740985.2
(22) Date of filing: 04.04.2007
(51) Int. Cl.: C02F 3/06, C02F 1/58, C02F 1/66

(54) **METHOD OF DECOLORIZING COLORED WASTEWATER**

(71) Applicant: Syntropy Co. Ltd, Aichi 461-0004 (JP); Tanabe, Seisuke, Nagano 386-0403 (JP)
(72) Inventor: TANABE, Seisuke, Ueda-shi Nagano 386-0403 (JP)
(74) Representative: Sajda, Wolf E.
(86) International application number: PCT/JP2007/057549
(87) International publication number: WO 2008/129595

(57) **Abstract**

A method of decolorizing colored wastewater, comprising an acidity adjusting step of adjusting colored wastewater so as to be acidic; a color component breakdown separation step of carrying out breakdown separation of any color components of the acidic wastewater having undergone the acidity adjusting step; and an adsorption separation step of carrying out adsorption separation of the color components after breakdown separation in the color component breakdown separation step by means of a filter layer with microbes fixed thereon. By this method, not only can colored wastewater occurring in various production sites or daily living be efficiently decolorized by means of simple facilities into transparent colorless water but also BOD, COD, total nitrogen, total phosphorus, etc. can be lowered at low cost.

## Description

### Background of the Invention

The present invention relates to a colored wastewater discoloration method, which can discolor and make colored wastewater and the like being generated from various production sites, human daily activities and so on and such as dye and pigment wastewater from textile industry and the like, pottery manufacturing industry wastewater containing glaze and the like, plating wastewater from metal-processing industry and the like, livestock industry wastewater, agroforestry wastewater, food industry wastewater, chemical and oil industry wastewater, electrical and electronics industry wastewater, iron and machine industry wastewater, restaurant industry wastewater and the like, into clear and colorless water, as well as reducing BOD, COD, total nitrogen, total phosphorus and so on.

Conventional methods to discolor high-concentration or low-concentration colored wastewater, generated from various production activities, vary in treatment techniques according to generation and quality of the wastewater. However, none of such methods uses a single technique. They use a combination of two or three techniques, yet not achieving satisfactory treatment. Especially discoloration has hardly been achieved ever.

In case the wastewater volume to be treated is small, such treatment methods are available as disposal treatment by an outsourced industrial waste collector, electrolytic cleaning treatment by electrolysis, agglomeration-separation cleaning treatment using coagulant such as anion and cation, activated sludge treatment by biodegradation treatment, and so on. However, all of these treatment methods are facing ever increasing production costs including such for treatment facilities and various running costs, and including such for treatment of byproducts generated therefrom.

Thus, in reality it has been practiced, in case the colored wastewater to be treated is large in volume and contains no harmful substances, that it is mixed with a substantial amount of industrial water and/or sea water and so on and then discharged into nature.
Patent document 1: None.

### Summary of the Invention

In view of the conventional drawback as described above, it is an object of the present invention to provide a colored wastewater discoloration method, which can discolor and make colored wastewater, being generated from various production sites and human daily activities, into clear and colorless water, efficiently by a simple method, as well as reducing BOD, COD, total nitrogen, total phosphorus and so on at low cost.

The above and further objects and novel features of the present invention will more fully appear from the following detailed description when the same is read in connection with the accompanying drawings.

It is to be understood that these are for the purpose of illustration only and are not intended to limit the invention.

In order to achieve the above mentioned purpose, a colored wastewater discoloration method of the present invention includes: an acidity adjusting process which adjusts the colored wastewater to acidity; a color component fracture separation process which fractures and separates a color component of the acidic wastewater which has been treated in the acidity adjusting process; and an adsorptive separation process which adsorbs and dissociates a color component separated and fractured through a filter layer to which a microorganism was fixed, after the color component fracture separation process.

According to another aspect of the present invention, a colored wastewater discoloration method of the present invention includes:
an acidity adjustment process wherein colored wastewater such as dye and pigment wastewater from textile industry and the like, pottery manufacturing industry wastewater containing glaze and the like, plating wastewater from metal-processing industry and the like, livestock industry wastewater, agroforestry wastewater, food industry wastewater, chemical and oil industry wastewater, electrical and
electronics industry wastewater, iron and machine industry wastewater, restaurant industry wastewater and the like, are acid adjusted to a
pH value of 4 or lower by mixing with acid adjuster; a color component fracture separation process, wherein the acidic wastewater, which has been treated in the acidity adjustment process, is passed through
acid-treated sawdust which is made from sawdust being disposed of in fungi production, and a color component fracture separation filter layer which has been adjusted to a pH value of 10 or more by adding alkaline adjuster to a mixture of the acid treated sawdust with charcoals such as rice husk charcoal and activated carbon; and an adsorptive separation process wherein after the rice husk charcoal is acid-treated following the color component fracture separation process, the fracture-separated color components being passed through a filter layer to be adsorbed thereon, where autochthonous-microorganisms existing in nature have been entrenched.

As is clear form the above-mentioned explanations, the present invention as hereinabove defined provides the effects enumerated below.
(1) The present invention includes an acidity adjusting process which adjusts the colored wastewater to acidity, a color component fracture separation process which fractures and separates a color component of the acidic wastewater which has been treated in the acidity adjustment process, and an adsorptive separation process which adsorbs and dissociates a color component separated and fractured after a color component fracture separation process, through a filter layer to which a microorganism was fixed, so that the colored wastewater is acid-treated to be made into acidic wastewater followed by fracture separation of color components, which are then adsorptively separated in the filter layer where autochthonous-microorganisms have been entrenched. Therefore, the present invention can make the colored wastewater clear and colorless.
(2) As described above under item (1), the autochthonous-microorganisms-entrenched filter layer can reduce content of BOD, COD, total nitrogen, total phosphorous and so on contained in the colored wastewater.
(3) As described above under item (1), because no special facility is required, treatment of the colored wastewater can be done easily, in a short time, and at low cost.
(4) Claim 2 provides the same effects as those described under the above items (1) to (3), because of passing through the color component fracture separation filter layer and the autochthonous-microorganisms-entrenched filter layer, treatment of the colored wastewater can be done easily and in a short time.
(5) In Claim 2, by passing through the color component fracture separation filter layer and the autochthonous-microorganisms-entrenched filter layer, traces of precious metals and hazardous substances can be adsorptively separated.

### Brief Description of the Drawings

- Fig. 1: is a process diagram to practice a first preferred embodiment of the present invention.
- Fig. 2: is a schematic diagram to practice the first preferred embodiment to practice the present invention.
- Fig. 3: is a process diagram to practice a second embodiment of the present invention.
- Fig. 4: is a schematic diagram to practice the second embodiment of the present invention.
- Fig. 5: is a process diagram to practice a third embodiment of the present invention.
- Fig. 6: is a schematic diagram to practice the third embodiment of the present invention.
- Fig. 7: is a process diagram to practice a fourth embodiment of the present invention.
- Fig. 8: is a schematic diagram to practice the fourth embodiment of the present invention.
- Fig. 9: is a process diagram to practice a fifth embodiment of the present invention.
- Fig. 10: is a schematic diagram to practice the fifth embodiment of the present invention.
- Fig. 11: is a process diagram to practice a sixth embodiment of the present invention.
- Fig. 12: is a schematic diagram to practice the sixth embodiment of the present invention.

### Detailed Description of the Invention

Preferred embodiments to practice the present invention will now be described in detail below referring to the accompanying drawings.

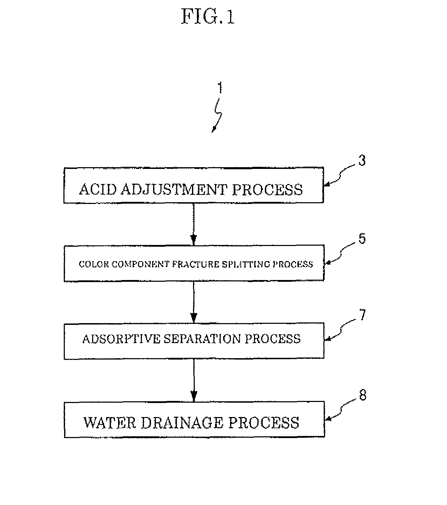

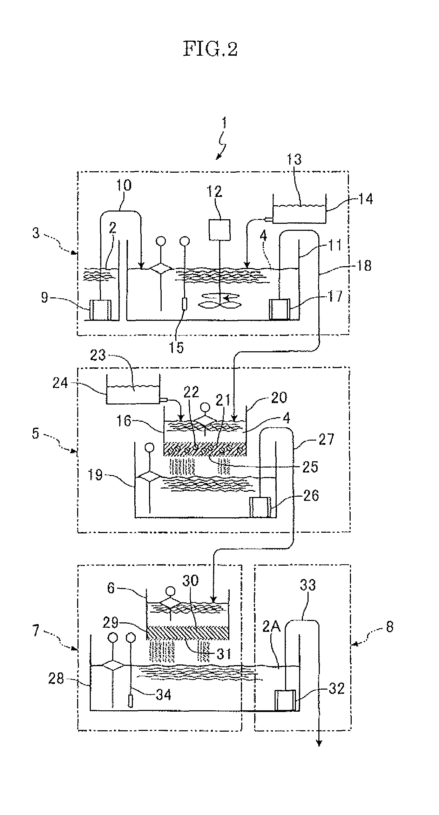

A first preferred embodiment to practice the present invention is shown in FIGS. 1 and 2, wherein 1 represents the colored wastewater discoloration method of the present invention, which can discolor and make colored wastewater 2 being generated from various production sites, human daily activities and so on and such as dye and pigment wastewater from textile industry and the like, pottery manufacturing industry wastewater containing glaze and the like, plating wastewater from metal-processing industry and the like, livestock industry wastewater, agroforestry wastewater, food industry wastewater, chemical and oil industry wastewater, electrical and electronics industry wastewater, iron and machine industry wastewater, restaurant industry wastewater and the like, into clear and colorless water 2A.

The colored wastewater discoloration method 1 comprises the following steps: an acidity adjustment process 3 wherein the colored wastewater 2 is adjusted as to its acid content; a color component fracture separation process 5 wherein, after the acidity adjustment process, fracture separation is made to color components of the acidic wastewater 4; an adsorptive separation process 7 wherein, after the color component fracture separation process, the fracture-separated color components are adsorptively separated in an autochthonous-microorganisms-entrenched filter layer 6; and a water discharge process 8 wherein clear and colorless water, being treated by separation in the adsorptive separation process 7, is discharged.

As illustrated in FIG. 2, in the acid adjustment process 3, colored wastewater 2 is supplied into a tank 11 through a colored wastewater supply pipe 10 having an intermediate pump 9, followed by agitation, using an agitator 12, of the colored wastewater 2 in the tank 11, while supplying an acid adjuster 13 such as hydrochloric acid, nitric acid, sulfuric acid and so on from a strong acid supply tank 14, to adjust the colored wastewater 2 into the acidic wastewater 4 which pH value is 4 or less, preferably less than 2 to be measured by a pH sensor 15.

In the color component fracture separation process 5, the acidic wastewater 4 is passed through a color component fracture separation filter layer 16. As illustrated in FIG. 2, the color component fracture separation filter layer 16 comprises a color component fracture separation filter cylinder 20 where the acidic wastewater 4 in the tank 11 in the acid adjustment process 3 is supplied through a pump 17 and a supply pipe 18 and discharged into a tank 19; acid-treated sawdust 21 which is made from sawdust being disposed of in fungi production, contained within the color component fracture separation filter cylinder 20; and a filter layer body 25 which is a mixture of the acid-treated sawdust 21 with rice husk charcoal and activated carbon, further mixed with the acid adjuster 23 supplied from an acid adjuster supply tank 24 so that the pH becomes 10 or above.

As illustrated in FIG. 2, the microorganism-entrenched filter layer 6, used in the adsorptive separation process, comprises: an adsorptive filtration cylinder 29 wherein the color component fractured wastewater in the tank 19 in the color component fracture separation process 5 is supplied through a pump 26 and a supply pipe 27, and then discharged into a tank 28; and an adsorptive separation filter layer body 31 made of rice husk charcoal, which has been made in such manner that rice husk charcoal 30 contained within the adsorptive filtering cylinder 29 is acid-treated and then entrenched with autochthonous-microorganisms existing in nature.

In the water discharge process 8, clear and colorless water 2A in the tank 28 used in the adsorptive separation process 7 is discharged to outside through a pump 32 and a water drainage hose 33.

Most of the color components of the colored wastewater 2 treated by the colored wastewater discoloration method 1 separates, then lose color and fade by passing through the filter layer 25 which has been adjusted so that the pH value of the color component fracture separation filter layer 16 becomes 10 or above.

Also, by passing through the adsorptive separation filter layer body 31 within the autochthonous-microorganisms-entrenched filter layer 6 in the adsorptive separation process 7, the colored wastewater, now losing color and faded, will have more than 99% of its color components adsorbed thereon, and then is discharged as clear, colorless and clean water.

A point to be noted is that the tank 28 used in the adsorptive separation process 7 has a pH sensor 34 therein, because of which the water is discharged only when the pH value is within the set value of the pH sensor 34.

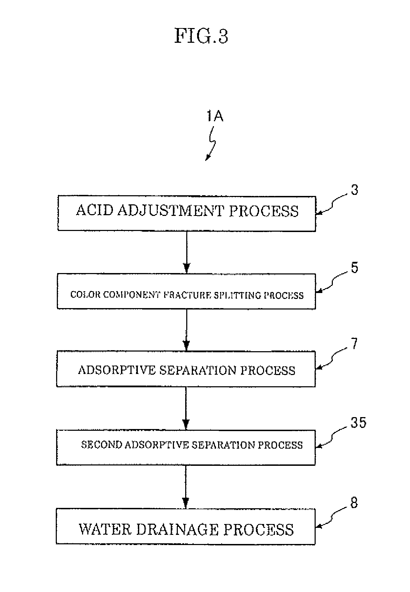

Explained next are other embodiments to practice the present invention as illustrated in FIGS. 3 to 16. In explaining these other embodiments to practice the present invention, the same component parts as those in the first preferred embodiments to practice the present invention, are given the same numerals in order to avoid the overlapping explanations.

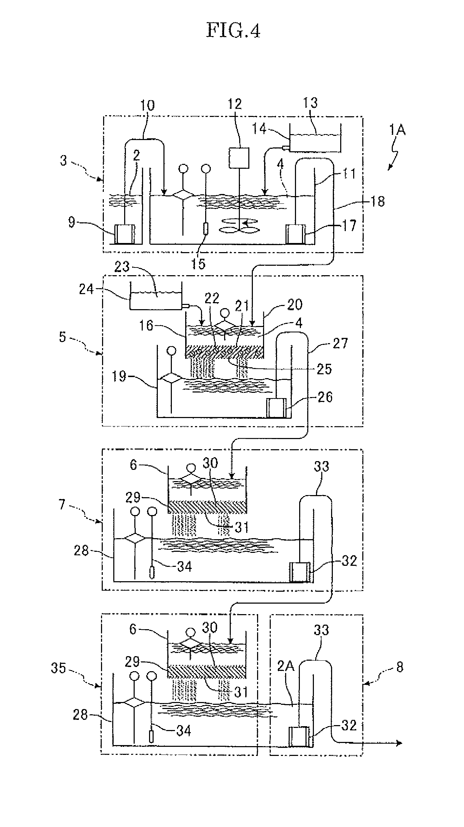

A second embodiment to practice the present invention is shown in FIGS. 3 and 4. It is distinguished from the first preferred embodiment to practice the present invention in that a second adsorptive separation process 35 utilizing a microorganisms-entrenched filter layer 6 is performed after the adsorptive separation process 7. A colored wastewater discoloration method I A utilizing a second adsorptive separation process 35 as described above provides action effects similar to those of the first preferred embodiment to practice the present invention, as well as firm adsorptive separation of color components of the colored wastewater.

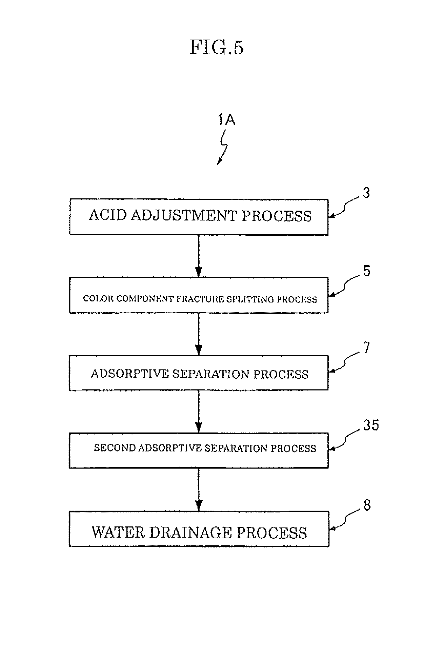

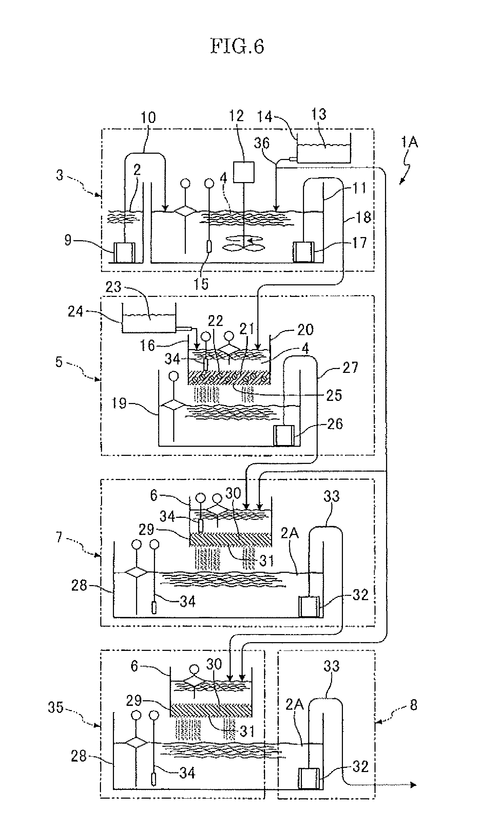

A third embodiment to practice the present invention is shown in FIGS. 5 and 6. It is distinguished from the second embodiment to practice the present invention by the following features: the acid adjuster can be provided into microorganisms-entrenched filter layers 6, 6 in the adsorptive separation process 7 and a second adsorptive separation process 35, the treatment operation automatically stops by receiving signal from pH sensors 34, 34 when set value is exceeded, and the strong acid 13 is provided from the strong acid supply tank 14 into the microorganisms-entrenched filter layers 6, 6 to wash them for function recovery; and the strong acid 13 used for washing is supplied through a supply pipe 36 into the tank 11 in which the acid adjustment process 3 is performed.

Another possible arrangement is that, simultaneously with automatic shutoff of the treatment operation, an alkaline adjuster 23 is supplied from the alkaline adjuster supply tank 24 into the color component fracture separation filter layer 16 in the color component fracture separation process 5 so as to restart operation automatically after alkalinity recovery.

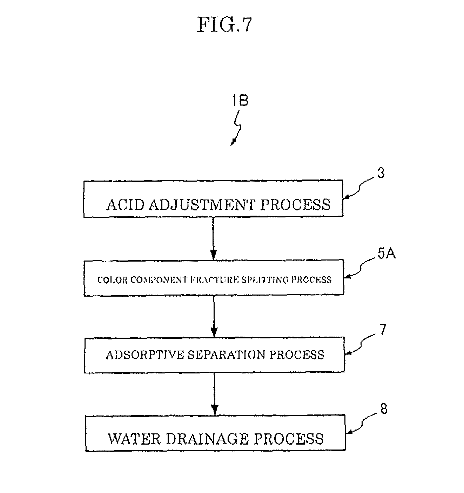

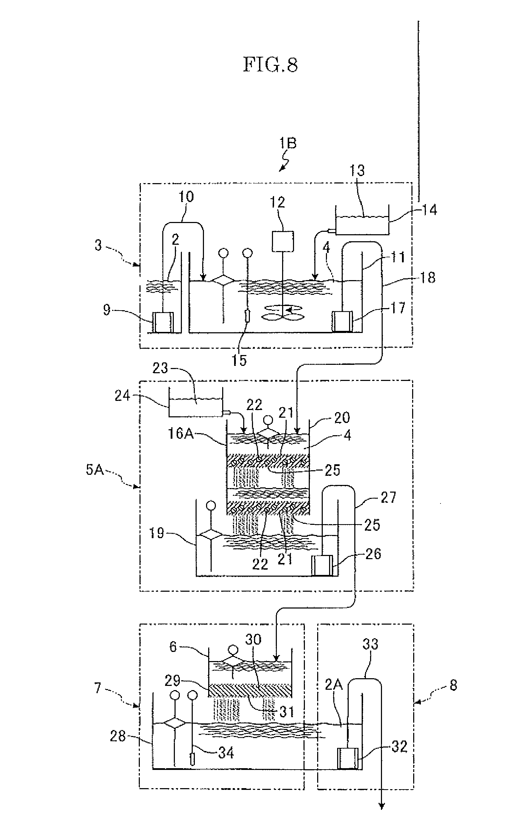

A fourth embodiment to practice the present invention is shown in FIGS. 7 and 8. It is distinguished from the first preferred embodiment to practice the present invention in that a color component fracture separation process 5A is performed by utilizing a color component fracture separation filter layer 16A having filter layer bodies 25, 25 installed in such manner as to form a dual layer within the color component fracture separation filter cylinder 20. A colored wastewater discoloration method 1B utilizing a color component fracture separation process 5A as described above provides action effects similar to those of the first preferred embodiment to practice the present invention.

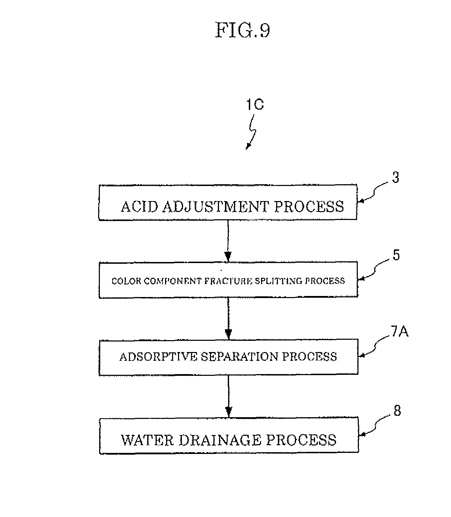

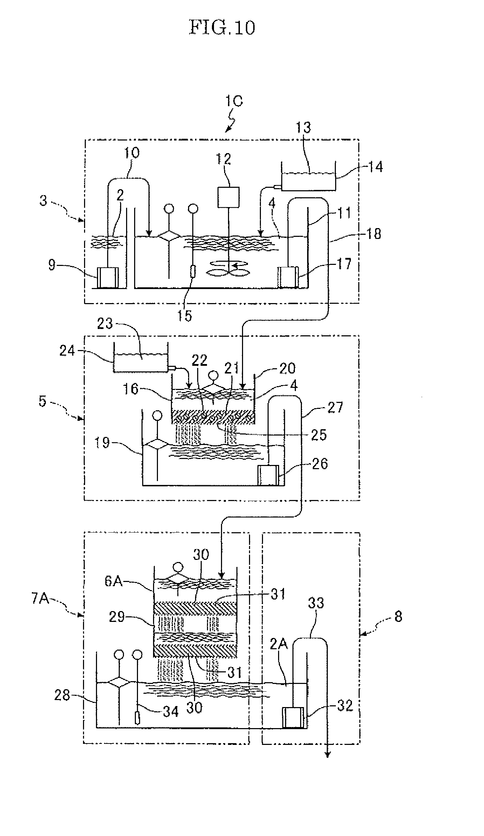

A fifth embodiment to practice the present invention is shown in FIGS.9 and 10. It is distinguished from the first preferred embodiment to practice the present invention that an adsorptive separation process 7A is performed by utilizing a microorganisms-entrenched filter layer 6A having filter layer bodies 31, 31 installed in such manner as to form a dual layer within the color component fracture separation filter cylinder 29. A colored wastewater discoloration method 1C utilizing an adsorptive separation process 7A as described above provides action effects similar to those of the first preferred embodiment to practice the present invention.

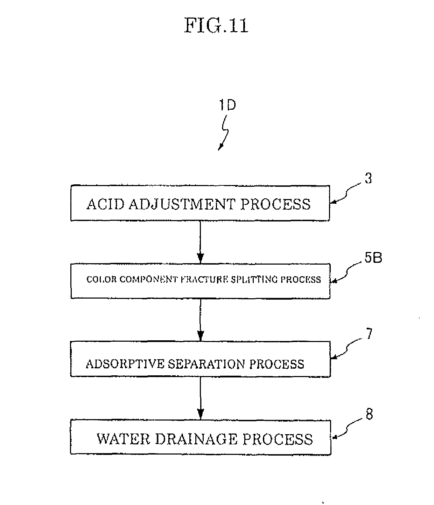

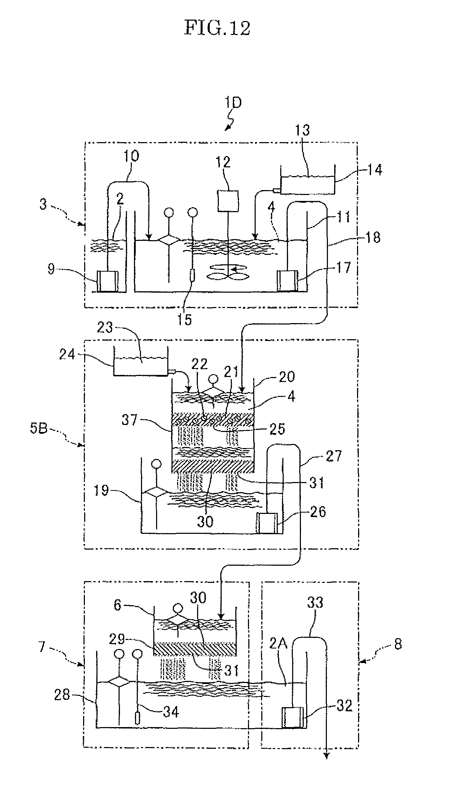

A sixth embodiment to practice the present invention is shown in FIGS.11 and 12. It is distinguished from the first preferred embodiment to practice the present invention in that a color component fracture separation process 5B is performed by utilizing a two-way filter layer 37 for color component fracture separation and adsorptive separation, having a filter layer body 25 and an adsorptive separation filter layer body 31 installed in such a manner as to form a dual layer within the color component fracture separation cylinder 20. A colored wastewater discoloration method 1D utilizing an adsorptive separation process 5B as described above provides action effects similar to those of the first preferred embodiment to practice the present invention.

The present invention is applicable in the industry of treating colored wastewater generated in various production sites, human daily activities and so on.

## Claims

1. A colored wastewater discoloration method including:
an acidity adjusting process which adjusts colored wastewater as to acidity;
a color component fracture separation process which fractures and separates a color component of the acidic wastewater which has been treated in said acidity adjusting process; and
an adsorptive separation process which adsorbs and dissociates a color component separated and fractured through a filter layer to which a microorganism was fixed, after the color component fracture separation process.

2. A colored wastewater discoloration method including:
an acidity adjustment process wherein colored wastewater such as dye and pigment wastewater from textile industry and the like, pottery manufacturing industry wastewater containing glaze and the like, plating wastewater from metal-processing industry and the like, livestock industry wastewater, agroforestry wastewater, food industry wastewater, chemical and oil industry wastewater, electrical and electronics industry wastewater, iron and machine industry wastewater, restaurant industry wastewater and the like, are acid adjusted to a pH value of 4 or lower by mixing with an acid adjuster;
a color component fracture separation process, wherein the acidic wastewater, which has been treated in the acidity adjustment process, is passed through acid-treated sawdust which is made from sawdust being disposed of in fungi production, and a color component fracture separation filter layer which has been adjusted to a pH value of 10 or more by adding alkaline adjuster to a mixture of the acid treated sawdust with charcoals such as rice husk charcoal and activated carbon; and
an adsorptive separation process wherein after the rice husk charcoal is acid-treated following the color component fracture separation process, the fracture-separated color components being passed through a filter layer to be adsorbed thereon, where autochthonous-microorganisms existing in nature have been entrenched.
